# EUROPÄISCHE PATENTANMELDUNG

(11) **EP 1 610 078 A2**
(43) Veröffentlichungstag der Anmeldung: **28.12.2005**
(21) Anmeldenummer: 05011818.1
(22) Anmeldetag: 01.06.2005
(51) Int. Cl.: F25C 1/14

(54) **Eiserzeugungs-Vorrichtung zum Erzeugen von Eiskristallen in einer wässrigen Lösung**

(30) Priorität: 02.06.2004 DE 202004008731 U
(71) Anmelder: Jahn, Ernst, 24941 Flensburg (DE)
(72) Erfinder: Jahn, Ernst, 24941 Flensburg (DE)
(74) Vertreter: Biehl, Christian

(57) **Zusammenfassung**

Vorrichtung zum Erzeugen von Eiskristallen in einer wässrigen Lösung mit wenigstens einer Einheit (27), bestehend aus einem durch eine Innenrohr (1) und einem Außenrohr (2) gebildeten Doppelrohr (1, 2), das mit Rohrstutzen (4, 5) zum Ein- bzw.- Ausleiten eines Kältemittels versehen ist, einem in dem Innenraum des Innenrohrs (1) angeordneten Rotor (12), der mit einer Mehrzahl von an der Innenwand des Innenrohrs (1) anliegenden Kratzern (11) versehen ist, einem das abzukühlende Fluid in den Innenraum des Innenrohrs (1) einführendes Rohrstück (8), einem das abgekühlte Fluid aus dem Innenraum des Innenrohrs (1) abführenden Rohrstück (10), ein das Außenrohr (2) umgreifendes, mit diesem einen geschlossenen Ringspalt (22) bildendes weiteres Rohr (21), einem Anschluss (23) zum Zuführen des warmen Fluids in den Ringspalt (22) und einem Anschluss (24) zum Abführen des im Ringspalt (22) an der Außenwand des Außenrohrs (2) vorgekühlten Fluids und einer Mehrzahl von den Rohrstücken (8) und den Anschlüssen (23) vorgeschalten Ventilen (29, 30, 34, 45), die eine bedarfsgeregelte Steuerung der Bewegungsrichtung des Fluids durch die Ringspalte (21, 22) erlauben.

## Beschreibung

Die Erfindung betrifft eine Eiserzeugungs-Vorrichtung zum Erzeugen von Eiskristallen in einer wässrigen Lösung.

Es sind Vorrichtungen zur Erzeugung von Eiskristallen in einer wäßrigen Mischung oder Lösung (nachfolgend als "Breieis" bezeichnet) bekannt, bei denen Wasser, dem eine gefrierpunkterniedrigende Substanz beigegeben wurde (im nachfolgenden wird dieses Gemisch als "Fluid" bezeichnet) soweit abgekühlt wird, bis sich Eiskristalle an einer gekühlten Wand bilden können. Das Fluid kann auch dadurch unterkühlt werden, dass unter Unterdruck eine Wasscrverdampfung herbeigeführt wird.

Der Erfindung liegt die Aufgabe zugrunde, eine Vorrichtung der eingangs genannten Art zu schaffen, deren Kälteleistung verbessert ist. Erfindungsgemäß wird diese Aufgabe durch die Merkmale des Anspruchs 1 gelöst.

Die Erfindung wird im folgenden anhand einer Zeichnung erläutert. Dabei zeigt:
- Fig. 1: eine Schnittdarstellung eines Eiserzeugers,
- Fig. 2: die Fluidstromführung für hintereinandergeschaltete Eiserzeuger mit einer Vorkühlung des Fluids in der bevorzugten Ausführung, und
- Fig. 3: eine alternative Fluidstromführung der hintereinandergeschalteten Eiserzeuger mit einer Vorkühlung des Fluids bei Umschaltung zur Vereisungsvermeidung.

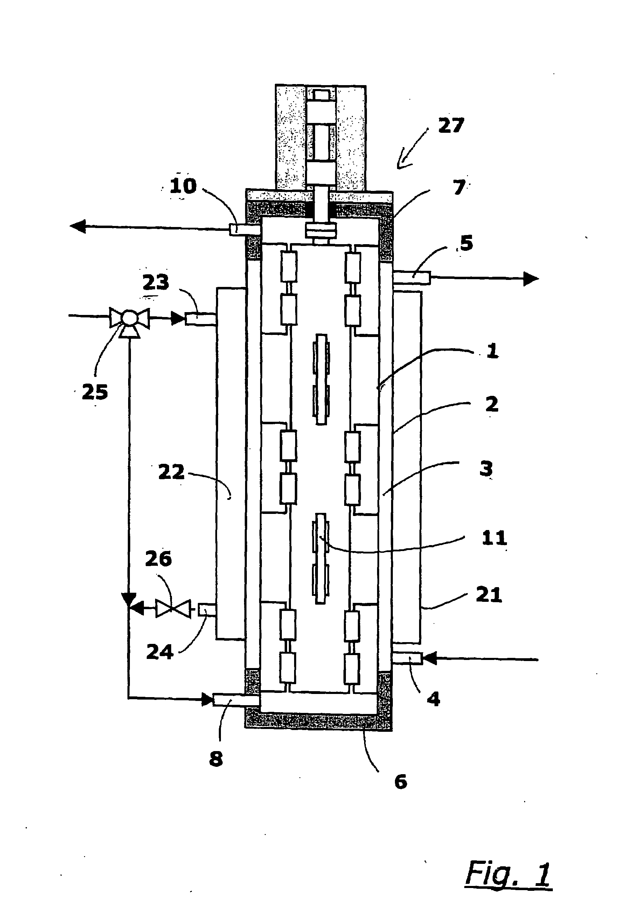

Fig. 1 zeigt den durch ein Innenrohr 1 und ein Außenrohr 2 (nachfolgend als "Doppelrohr" bezeichnet) gebildeten Eiserzeuger. Die Rohre 1, 2 bilden einen Ringspalt 3, der beidseitig verschlossen ist und in dem ein Kältemittel verdampfen kann. Dieses Kältemittel wird in den Ringspalt 3 durch einen Rohrstutzen 4 eingespeist und verläßt den Ringspalt 3 durch einen Rohrstutzen 5.

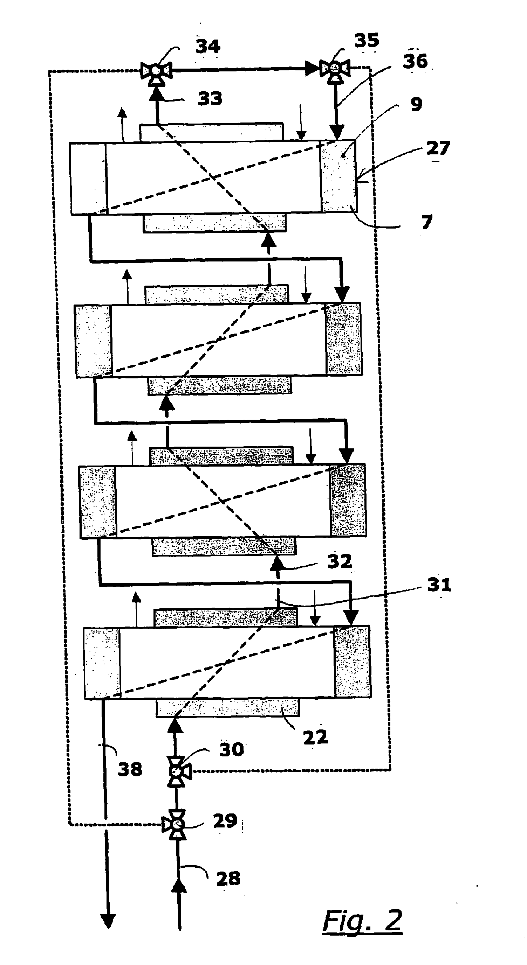

An beiden Enden des Doppelrohres sind Deckel angebracht und zwar ein "unterer" Deckel 6 und ein "oberer" Deckel 7. Beide Deckel 6 und 7 sind mit dem Doppelrohr dicht verbunden, z.B. durch eine Flanschverbindung (bildlich in Fig. 1 und 2 nicht dargestellt). Durch ein Rohrstück 8 wird durch den unteren Deckel 6 das Fluid in den Innenraum 9 des Doppelrohres eingebracht und tritt durch ein weiteres Rohrstück 10 gekühlt und ggf. mit Eiskristallen angereichert aus.

Das verdampfende Kältemittel im Ringspalt 3 des Doppelrohres kühlt die Innenseite des Innenrohres 1. Dadurch können sich bei genügender Abkühlung des Fluides im Innenraum 9 des Eiserzeugers an der Oberfläche der Innenseite des Innenrohres 1 Eiskristalle bilden. Um die Innenseite des Innerohres 1 vor einer zunehmend dicker werdenden Eisschicht zu bewahren, bestreichen Kratzer 11 diese Fläche. Die Kratzer 11 sind mit einem Rotor 12 verbunden und zwar in einer Weise, daß sie elastisch auf die unrunde und/oder nicht gerade Kontor des Innenrohres reagieren können. Die elastische Verbindung ist mit 13 bezeichnet und nur schematisch dargestellt (es kann sich z.B. um eine federnde kraftschlüssige Verbindung oder eine federnde formschlüssige Verbindung - wie in der DE 101 13 395 C1 angegeben - handeln).

In Fig. 1 sind die Kratzer 11 beispielhaft in vertikal 5 Ebenen mit zwei über den Radius verteilten Kratzern 11 dargestellt, wobei benachbarte Ebenen z.B. um jeweils 90° versetzt sind. Es können jedoch auch eine andere Anzahl von Ebenen sowie eine andere Anordnung und Zahl von Kratzern 11 vorgesehen sein.

Zusätzliche Kälteleistung wird gewonnen, indem das Fluid - so es denn warm genug ist - an der Außenfläche des kältemittelgekühlten Außenrohres 2 vorgekühlt wird. Dies wird dadurch erreicht, dass ein drittes Rohr 21 am Außenrohr 2 angebracht wird. Durch das verdampfende Kältemittel im Ringspalt 3 wird die Außenwand des Außenrohres 2 nämlich ebenfalls gekühlt. Fluid, das im Ringspalt 22 zwischen dem Außenrohr 21 und dem weiteren Rohr 21 strömt, wird daher abgekühlt. Um diese zusätzliche Kühlung nutzen zu können, wird Fluid über einen Anschluss 23 in den Ringspalt 22 eingegeben. Beim Passieren der gekühlten Außenwand des Außenrohres 2 kühlt das Fluid ab und tritt über den Anschluss 24 aus. Danach kann es über das Rohrstück 8 in den Innenraum 9 des Eiserzeugers eintreten.

Die Beaufschlagung des Ringspaltes 22 mit warmem Fluid kann über das Ventil 25 geregelt werden. Für den Fall, daß das Fluid warm genug ist, daß im Ringspalt 22 noch keine Abkühlung auf Eistemperatur stattfindet (was z.B. über die Temperaturmessung am Rohr 24 gemessen werden kann), lässt das Ventil 25 die Durchströmung des Ringspaltes 22 zu. Das vorgekühlte Fluid tritt nach Durchströmen des Ringspaltes 22 am Rohr 24 aus und sofort über das Rohrstück 8 in den Innenraum 9 in den Eiserzeuger ein.

Für den Fall, daß das austretende Fluid am Rohr 24 zu kalt wird oder daß das zuströmende Fluid vor dem Ventil 25 bereits zu kalt ist, schleust das Ventil 25 das Fluid am Ringspalt 22 vorbei und veranlaßt das direkte Einströmen in den Eiserzeuger über das Rohrstück 8. Ggf. kann z.B. das Ventil 26 schließen und somit eine Beaufschlagung des Ringspaltes 22 verhindern oder das Ventil 26 fördert Restfluid aus dem Ringspalt 22 nach außen (bildlich nicht dargestellt). In beiden Fällen wird ein Vereisen des Ringspaltes 22 verhindert oder es findet nur eine begrenzte Vereisung statt.

Durch das Anbringen des dritten Rohres 21 auf der Außenseite des Rohres 2 ergibt sich nahezu eine Verdoppelung der Wärmeübertragungsfläche. Der Eiserzeuger kann somit eine drastisch höhere Kälteleistung erbringen. Voraussetzung ist jedoch, daß das Fluid am Ventil 25 warm genug ist. Dies trifft insbesondere bei Klimaanlagen und bei der Meerwasserkühlung auf. Bei Klimaanlagen ist die Rücklauftemperatur zumeist ca. 12 °C, bei Meerwasser kann die Temperatur in den Tropen bis zu 32 °C betragen. In diesem Fall bietet sich eine Vorkühlung, wie beschrieben, an. Die Vorkühlung im Ringspalt 22 kann bei verdoppelter Kälteleistung gegenüber dem Betrieb ohne Vorkühlung erheblich sein (typische Werte):

| Eis am Austritt | zulässige Vorkühlung um |
|---|---|
| 5 % Eis | 4 K |
| 10 % Eis | 8 K |
| 15 % Eis | 12 K |
| 20 % Eis | 16 K |
| 25 % Eis | 20 K |
| 30 % Eis | 24 K |
| 35 % Eis | 28 K |
| 40 % Eis | 32 K |

Obige Zahlenwerte lassen erkennen, daß die Vorkühlung des warmen Fluids an der Außenfläche des Außenrohres 2 des Ringspalts 22 vorteilhaft ist, da bei gleichen Wärmeübertragungsverhältnissen auf der Innenseite des Innenrohres 1 entsprechende Eiskristallbildung eintritt.

Man kann die Kombination aus Verkühlung und Eisbildung sogar so regeln, daß am Rohr 24 die Temperatur gemessen und als Stellgröße für eine Regelung dient, welche den Massenstrom durch den Eiserzeuger anpaßt.

Eis, welches aus einer wäßrigen Lösung oder Mischung (Fluid) erzeugt wird, hat nicht dieselbe Qualität hat wie Eis aus (reinem) Wasser. Eis aus Fluid wird nicht spontan hart sondern wird "sulzig" oder "matschig". Es ist im Hinblick auf die Ausdehnung von Eis und der daraus resultierenden Volumenzunahme ein Unterschied, ob man Fluid oder Wasser gefriert. Dies ist insofern von Bedeutung, als das der Ringspalt 22 beim Einfrieren, d.h. wenn das Fluid am Austritt bereits Eiskristalle aufweist - und somit Eisbildung an der Außenfläche des Außenrohres 2 eingetreten ist - nicht von festem Eis zunehmend ausgefüllt wird, sondern sich mit matschigem Eis anreichert. Dieses Eis ist hinsichtlich seiner Ausdehnungskräfte weniger kritisch als bei reinem Wasser. Die "Sprengwirkung" ist damit (nahezu) unerheblich. Eine, durch unzulängliche Regelung einsetzende Eisbildung würde den Ringspalt 22 lediglich verstopfen, den Eiserzeuger jedoch nicht sprengen.

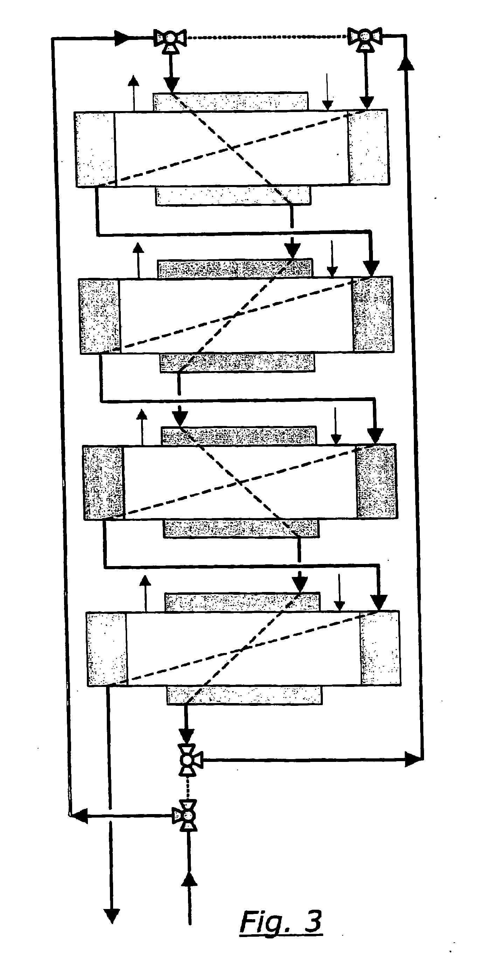

Man kann bei mehreren, hintereinander geschalteten Eiserzeugern 27, wie in Fig. 2 und 3 dargestellt, die Durchströmung der Ringspalte so gestalten, daß diese in veränderbarer Reihenfolge (z.B. von links nach rechts und von rechts nach links) durchströmt werden, sofern die Gefahr der Eisbildung einsetzt. In den Fig. 2 und 3 ist das komplette Rohrschema für das Fluid beispielhaft für 4 hintereinandergeschaltete Eiserzeuger dargestellt. Die genaue Erläuterung der Rohrführung wird mittels der Fig. 2 und 3 vorgenommen (die Kältemittelverrohrung der Eiserzeuger ist durch kleine Pfeile angedeutet, zeichnerisch jedoch nicht im Detail ausgeführt, da die Kältemittelführung für das beschrieben Verfahren der Fluidvorkühlung und Eiserzeugung ohne weiteren Belang ist).

In Fig. 2 wird die bevorzugte Schaltung gezeigt. Die punktierten Linien sind in diesem Fall ohne Belang. Die wesentlichen Strömungswege sind fett dargestellt. Warmes Fluid strömt über die Rohrleitung 28 durch die, auf horizontalen Durchgang geschalteten, Dreiwegeventile 29 und 30 in den Ringspalt 22 des ersten (linken) Eiserzeugers 27 und wird dabei gekühlt. Die Passage durch den Ringspalt ist durch gestrichelte Linien angedeutet.

Das gekühlte Fluid verläßt den Ringspalt 22 des ersten Eiserzeugers am Rohr 31 (entspricht 24 in Fig. 1, ist zeichnerisch in Fig. 2 und 2 jedoch in anderer Anordnung gezeigt). Vom Austritt 31 des ersten Eiserzeugers gelangt das Fluid über das Rohr 32 (entspricht 23 in Fig. 1) in den Ringspalt 22 des darauffolgenden, zweiten Eiserzeugers. Die Passagen durch die Ringspalte 22 der Eiserzeuger erfolgt in immer derselben Weise, bis das abgekühlte Fluid den letzten Eiserzeuger durch das Rohr 33 verläßt. Die Passage durch die Ringspalte 22 der Eiserzeuger stellt somit die leistungsverbessernde Vorkühlung dar.

Vom Rohr 33 wird das vorgekühlte Fluid über das Dreiwegeventil 34 zum Dreiwegeventil 35 gefördert und tritt am Rohr 36 über den unteren Deckel 7 in den Innenraum 9 des linken Eiserzeugers ein. Sofern die Austrittstemperatur am Rohr 33 höher als die Temperatur der ersten Eisbildung ist, wird das Fluid weiter abgekühlt, bis die Temperatur der ersten Eiskristallbildung erreicht wird. Andernfalls setzt sofort die Eiskristallbildung ein. Das Fluid durchläuft nun die Innenräume 9 der einzelnen Eiserzeuger (die Passagen sind wiederum mit gestrichelten Linien angedeutet). Das Fluid, welches Eiskristalle enthält, tritt am linken Eiserzeuger 27 über das Rohr 38 aus und kann dann zweckmäßig weiterverwendet werden.

Bislang wurde in Fig. 2 davon ausgegangen, daß das Fluid nach Verlassen der Ringspalte 22 der Eiserzeuger 27 die Temperatur der ersten Eiskristallbildung erreicht hat oder sogar noch wärmer ist. Für den Fall, daß das Fluid jedoch in den Ringspalten 22 stärker abgekühlt wird und in einem dieser Ringspalte die Temperatur der ersten Eiskristallbildung schon vor Verlassen des letzen Ringspaltes durch das Rohr 33 eingesetzt hat, werden diejenigen Ringspalte zunehmend vereisen. Das Eiswachstum fängt an der Außenfläche des Außenrohres 2 an.

Mit zunehmender Betriebsdauer (und sonst unveränderten Randbedingungen) wird die Eisschicht zunehmen. Dabei kann der Eiserzeuger letztlich verstopfen, nicht zuletzt dadurch, daß der Volumenstrom des Fluides mit zunehmender Eisbildung abnimmt. Damit wäre das Ende der Vorkühlung erreicht, da die blockierten Eiserzeuger im Ringspalt 22 nicht mehr wirksam vorkühlen können. Man kann jedoch die Hydraulik des Fluides durch eine Umschaltung so verändern, daß zyklisch oder bedarfsgesteuert die Strömungsrichtung durch die Ringspalte 22 der Eiserzeuger 27 umgekehrt wird.

Fig. 3 zeigt die Strömungsführung des Fluides nach einer solchen Umschaltung. Wiederum sind die punktierten Linien in diesem Fall ohne Belang und der Strömungsweg ist fett dargestellt. Das warme Fluid tritt über das Rohr 28 und das auf "Durchgang nach oben" geschaltete Dreiwegeventil 29 in die Rohrleitung 30 ein und wird über das Dreiwegeventil 34 und das Rohr 33 in den Ringspalt 22 des rechten Eiserzeugers 27 eingespeist. Dabei wird das Fluid abgekühlt, insbesondere falls sich Eis im Ringspalt 22 befindet. Dieses Eis wird abgeschmolzen und der behinderte Strömungsweg der Ringspalte 22 wird sukzessive wieder durchgängig. Das Fluid durchströmt nach und nach die Ringspalte 22 und tritt am Rohr 41 des rechten Eiserzeugers 27 aus.

Über das auf "Durchgang nach unten" geschaltete Dreiwegeventil 30 gelangt das vorgekühlte Fluid zum Rohr 42 und wird über das Dreiwegevetil 35 auf das Rohr 43 (in Fig. 4 mit 36 bezeichnet, jedoch mit entgegengesetzter Strömungsrichtung) gegeben. Ab jetzt entspricht der Strömungsweg des Fluides dem der Fig. 2 und wird daher nicht weiter erläutert.

Man kann durch die Umschaltung der Hydraulik gemäß Fig. 2 und Fig. 3 erreichen, daß ein dauerhaftes Einfrieren der Ringspalte 22 nicht stattfinden kann. Die kältetechnischen Einrichtungen bleiben von der Umschaltung unberührt.

Anstelle der Dreiwegeventile können auch einfache Ventile verwendet werden, sofern sie so geschaltet werden, daß sie die benötigten Strömungswege freimachen oder schließen. Diese Maßnahmen sind für einen Fachmann einsichtig und bedürfen keiner weiteren Erläuterung.

## Patentansprüche

1. Eiserzeugungs-Vorrichtung zum Erzeugen von Eiskristallen in einer wässrigen Lösung, **gekennzeichnet durch**
- wenigstens eine Einheit (27), bestehend aus einem **durch** eine Innenrohr (1) und einem Außenrohr (2) gebildeten Doppelrohr (1, 2), das mit Rohrstutzen (4, 5) zum Ein- bzw.- Ausleiten eines Kältemittels versehen ist,
- einem in dem Innenraum des Innenrohrs (1) angeordneten Rotor (12), der mit einer Mehrzahl von an der Innenwand des Innenrohrs (1) anliegenden Kratzern (11) versehen ist,
- einem das abzukühlende Fluid in den Innenraum des Innenrohrs (1) einführendes Rohrstück (8),
- einem das abgekühlte Fluid aus dem Innenraum des Innenrohrs (1) abführenden Rohrstück (10),
- ein das Außenrohr (2) umgreifendes, mit diesem einen geschlossenen Ringspalt (22) bildendes weiteres Rohr (21),
- einem Anschluss (23) zum Zuführen des warmen Fluids in den Ringspalt (22),
- einem Anschluss (24) zum Abführen des im Ringspalt (22) an der Außenwand des Außenrohrs (2) vorgekühlten Fluids, und
- einer Mehrzahl von den Rohrstücken (8) und den Anschlüssen (23) vorgeschalten Ventilen (29, 30, 34, 45), die eine bedarfsgeregelte Steuerung der Bewegungsrichtung des Fluids **durch** die Ringspalte (21, 22) erlauben.
